# FASCICULE DE BREVET EUROPEEN

(11) **EP 2 127 956 B1**
(45) Date de publication et mention de la délivrance du brevet: **22.12.2010**
(21) Numéro de dépôt: 09160699.6
(22) Date de dépôt: 19.05.2009
(51) Int. Cl.: B29C 45/83, F16H 25/24, F16H 57/04, F16H 25/22

(54) **Dispositif de mise en référence géométrique d'un pare-chocs pour son montage sur une structure de véhicule**
Vorrichtung zur Ausrichtung eines Stossfängers bei seiner Anbringung an einer Fahrzeugstruktur
Device for the adjustment of a bumper during its mounting to a vehicle structure

(30) Priorité: 28.05.2008 FR 0853464
(43) Date de publication de la demande: 02.12.2009
(73) Titulaire: Peugeot Citroën Automobiles SA, 78943 Vélizy-Villacoublay Cedex (FR)
(72) Inventeur: Remy, Stéphane, 70400, BELVERNE (FR); Lepine, Arnaud, 25420, BART (FR)
(74) Mandataire: Fernandez, Francis Lionel

(56) Documents cités:
- EP-A- 1 070 639
- EP-A- 1 780 086
- DE-A1-102005 051 473
- US-A1- 2007 046 042

## Description

La présente invention concerne un dispositif de mise en référence géométrique d'un pare-chocs pour son montage sur une structure de véhicule, en particulier de véhicule automobile. Elle concerne aussi un procédé de montage d'un pare-chocs sur une caisse de véhicule, qui utilise un tel dispositif de mise en référence.

En production automobile, les divers indexages et fixations - désignés aussi « références » dans la suite du texte - qui permettent la mise en place d'un pare-chocs sur la caisse du véhicule sont créés très tôt en amont à des stades d'assemblage différents, ce qui a pour résultat d'engendrer des dispersions géométriques entre elles. De plus, le pare-chocs présente ses propres dispersions géométriques.

Il y donc nécessité d'adapter certaines références en fonction de la géométrie de la caisse et du pare-chocs, par conséquent d'avoir, au montage du pare-chocs, un moyen de réglage précis de la position de ce dernier par rapport à la caisse du véhicule.

Le document FR 2 699 131 décrit un dispositif réglable de montage d'un pare-chocs sur une structure de véhicule automobile. Ce dispositif comprend :
- un support associé à la structure et fait d'un appui avec au moins une surface plane parallèle à l'axe longitudinal (en X) et à l'axe transversal (en Y) du véhicule,
- une butée perpendiculaire à l'axe en X et un logement délimité par deux parois en vis-à-vis parallèles à cette surface plane,
- un étrier fait de deux branches qui sont parallèles, dont l'une au moins est destinée à reposer contre cette surface plane et qui sont reliées par un pont oblique,
- un embout longiligne qui est porté par le pont entre les branches avec une partie cylindrique attenante au pont et qui est destiné à être engagé dans le logement pour être au contact de ses parois et d'au moins une came centrée sur cette partie cylindrique qu'elle entoure au moins partiellement,
- un disque avec un ajour cylindrique qui est destiné à être monté sur cette partie cylindrique et qui présente un côté avec une contre-came destinée à coopérer avec cette came,
- un socle avec une embase cunéiforme qui présente une face oblique destinée à coopérer avec ce pont et une face perpendiculaire à l'axe en X et qui est transpercée d'au moins une boutonnière perpendiculaire aux branches et avec un piètement fixé à cette face et destiné à recevoir un pare-chocs, et
- des moyens de fixation pour immobiliser notamment le socle une fois les réglages effectués.

Le document US 7 273 246 décrit une structure de fixation d'un projecteur et d'une partie latérale de pare-chocs. Cette structure comprend un projecteur, un pare-chocs ayant une partie centrale et une partie latérale à chacune de ses deux extrémités, un support d'armature de radiateur avec au moins trois parties de fixation situées respectivement sur une face interne avant, une face externe avant, et un côté arrière où les parties de fixation du projecteur sont fixées au support d'armature de radiateur. Le support de radiateur présente deux pattes de fixation, qui ne sont pas « monobloc » avec le support. La première patte de fixation peut être réglée en position et fixée de telle manière que la partie de fixation située sur la face externe avant du projecteur soit bien placée dans une position prédéterminée par rapport au support de radiateur. La seconde patte de fixation peut être réglée en position et fixée au moins dans la direction verticale du véhicule par rapport à la première patte de fixation. De plus, au moins une des deux parties latérales du pare-chocs est fixée dans le voisinage de la partie de fixation située sur la face externe avant du projecteur par un clip de retenue fixé à la seconde patte de fixation.

Le document JP 58224834 décrit un moyen pour faciliter l'opération de montage d'une peau de pare-chocs sur une armature de pare-chocs. L'armature de pare-chocs est constituée par la surface supérieure, la surface avant et la surface inférieure d'une plaque d'acier de section en U. La surface supérieure est pourvue d'un orifice ou lumière de réglage. La peau de pare-chocs est constituée par la surface supérieure, la surface avant et la surface inférieure d'une plaque de résine de section en U. La surface supérieure est pourvue d'une nervure de positionnement dirigée vers l'armature de pare-chocs. La nervure de positionnement est ajustée dans l'orifice de réglage. Un boulon de fixation est inséré dans une fente située dans la peau de pare-chocs et est vissé dans un alésage fileté de l'armature de pare-chocs, de manière à réaliser ainsi le montage de la peau de pare-chocs sur l'armature de pare-chocs.

Le document DE102005051473 divulgue les caracteristiques du preambule de la revendication 1.

Le but de la présente invention est de fournir un dispositif de mise en référence, réglable, pour son montage sur une structure de véhicule, en particulier de véhicule automobile, qui offre des références adaptées en fonction de la géométrie de la caisse et du pare-chocs, un minimum de références étant créées en amont du stade de montage du pare-chocs.

Un autre but de la présente invention est de fournir un tel dispositif de mise en référence, qui permette de réaliser de manière très précise la mise en référence du pare-chocs sur la caisse dans tous les sens et toutes les directions.

Un autre but de la présente invention est de fournir un tel dispositif de mise en référence, dont l'utilisation permettre d'améliorer la qualité perçue par l'usager de l'esthétique du pare-chocs sur la caisse.

C'est aussi un but de la présente invention de fournir un tel dispositif de mise en référence, qui permette de limiter le nombre de références sur la caisse, par conséquent de réaliser un gain économique sur le coût des moyens de ferrage et sur les pièces de structure du véhicule.

Enfin, c'est également un but de la présente invention de fournir un tel dispositif de mise en référence, qui soit de conception, de réalisation et de mise en oeuvre simple, qui soit très précis, robuste et fiable.

Pour parvenir à ces buts, la présente invention a pour objet un dispositif de mise en référence géométrique d'un pare-chocs pour son montage sur une structure de véhicule, en particulier de véhicule automobile. Le pare-chocs comprend une armature de pare-chocs et la structure comprend des zones d'appui pour l'armature. Ce nouveau dispositif est constitué d'au moins une pièce d'appui, réglable, qui est montée sur l'armature de pare-chocs et vient en appui sur une zone d'appui de la structure. Cette pièce d'appui réglable comporte un moyen permettant de la faire coulisser par rapport à l'armature de pare-chocs contre l'action d'un moyen de rappel élastique, de manière à réaliser la mise en référence dans tous les sens et toutes les directions du pare-chocs sur la caisse du véhicule. Selon l'invention ledit moyen de rappel élastique est constitué par un système de ressort comprenant au moins une patte élastique souple qui vient en appui sur l'armature de pare-chocs, l'effet de rappel élastique étant obtenu par la déformation élastique de la patte élastique souple, ladite patte élastique souple du système de ressort étant intégrée à la partie supérieure de la pièce d'appui, son extrémité libre venant en appui sur l'armature de pare-chocs, ledit système à ressort comportant aussi une patte secondaire, qui est reliée à la partie sensiblement médiane de la patte élastique souple et qui comporte une extrémité libre venant en appui contre la partie supérieure de la pièce d'appui lors de la compression du système de ressort.

De préférence, le dispositif comporte deux pièces d'appui réglables, situées dans le voisinage de l'une et l'autre des extrémités de l'armature de pare-chocs.

Le moyen de coulissement de la pièce d'appui réglable par rapport à l'armature de pare-chocs est constitué par une lumière oblongue de la pièce d'appui et un axe de coulissement, solidaire de l'armature de pare-chocs, qui peut coulisser dans ladite lumière.

Chaque pièce d'appui peut présenter une forme sensiblement en « U », la face qui vient en appui sur la zone d'appui (4a) de la structure du véhicule étant une surface latérale du « U ».

Selon une variante de réalisation particulièrement avantageuse, chaque pièce d'appui réglable présente une forme sensiblement en « L », la face qui vient en appui sur la zone d'appui de la structure du véhicule étant une branche du « L ».

Selon cette variante de réalisation de la pièce d'appui en « L », la pièce d'appui constituée d'une branche de guidage, sensiblement verticale, portant le moyen de coulissement et d'une branche d'appui, sensiblement horizontale, qui vient en appui sur la zone d'appui de la structure du véhicule.

D'autres buts, avantages et caractéristiques de l'invention apparaîtront dans la description qui suit de modes de réalisation préférés, non limitatifs de l'objet et de la portée de la présente demande de brevet, accompagnée de dessins dans lesquels :
- la figure 1 représente, de manière schématique, un pare-chocs en place sur un véhicule automobile,
- les figures 2A et 2B illustrent, de manière schématique, le principe de la mise en référence d'une armature de pare-chocs sur la caisse d'un véhicule automobile, en position d'approche de la caisse (figure 2A) et en position d'appui (figure 2B) sur la caisse, respectivement,

- les figures 3 et 4 représentent, de manière schématique, une pièce d'appui réglable selon la présente invention, en position d'approche de la caisse (figure 3) et en position d'appui (figure 4) sur la caisse, respectivement,
- la figure 5 est une vue en perspective d'une pièce d'appui réglable, selon la présente invention,
- les figures 6 et 7 représentent la pièce d'appui réglable de la figure 5 arrivant au contact de l'armature de pare-chocs (figure 6) et stabilisé en position de référence (figure 7), et
- la figure 8 représente, de manière schématique, une pièce d'appui réglable en forme de U, selon une variante de réalisation de la pièce d'appui de la présente invention.

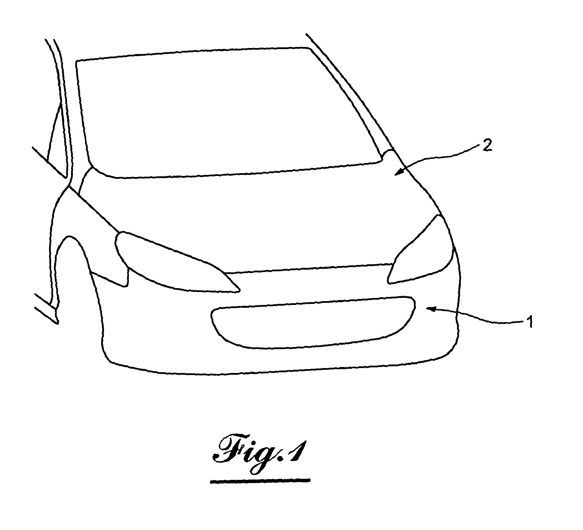

En référence au dessin de la figure 1, la présente invention se rapporte à un système de mise en référence adaptatif d'un pare-chocs avant, désigné 1, sur la structure ou caisse, désignée 2, d'un véhicule, en particulier d'un véhicule automobile.

Par « référence », on entend, dans la suite du présent texte, les éléments de positionnement géométrique, tels que les dispositifs d'indexage et de fixation, qui permettent la mise en place du pare-chocs 1 sur la structure 2 du véhicule.

Par « référence adaptative », on entend une référence réglable, qui permet d'adapter la mise en place du pare-chocs sur la structure du véhicule en fonction des dispersions géométriques du pare-chocs et de celles de la structure.

Le pare-chocs 1 est mis en référence sur la structure du véhicule par la mise en référence de son élément constitutif principal, qui est l'armature de pare-chocs, désignée 3.

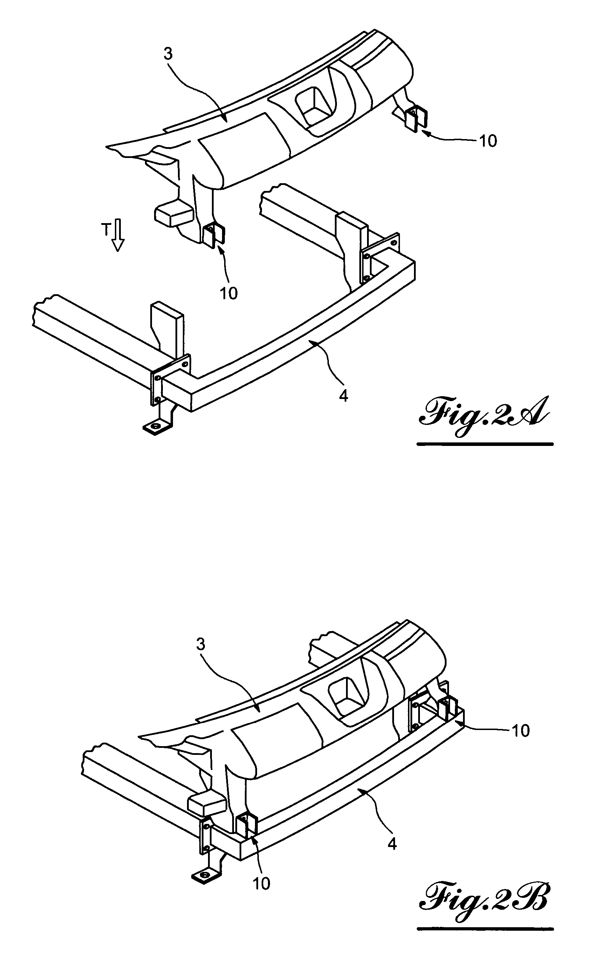

Les figures 2A et 2B illustrent, de manière très schématique, la mise en référence d'une armature 3 de pare-chocs sur une poutre 4 de la structure d'un véhicule automobile, en position d'approche de l'armature 3 vers la poutre (figure 2A) et en position d'appui de l'armature 3 sur des zones d'appui de la poutre 4 (figure 2B). Les pièces d'appui, désignées 10 de manière générale, solidaires en translation (selon sens de la flèche T de la figure 2A) de l'armature 3 de pare-chocs, sont des références adaptatives et s'adaptent, par conséquent, à la géométrie du pare-chocs et de la structure du véhicule, de la manière décrite plus loin dans le texte.

La présence de ces références adaptatives 10 permet de réduire le nombre de références non réglables, qui sont créées, de manière classique, en amont du stade de montage du pare-chocs sur la structure du véhicule, et qui n'ont pas la possibilité d'absorber les dispersions dimensionnelles ou géométriques mentionnées précédemment.

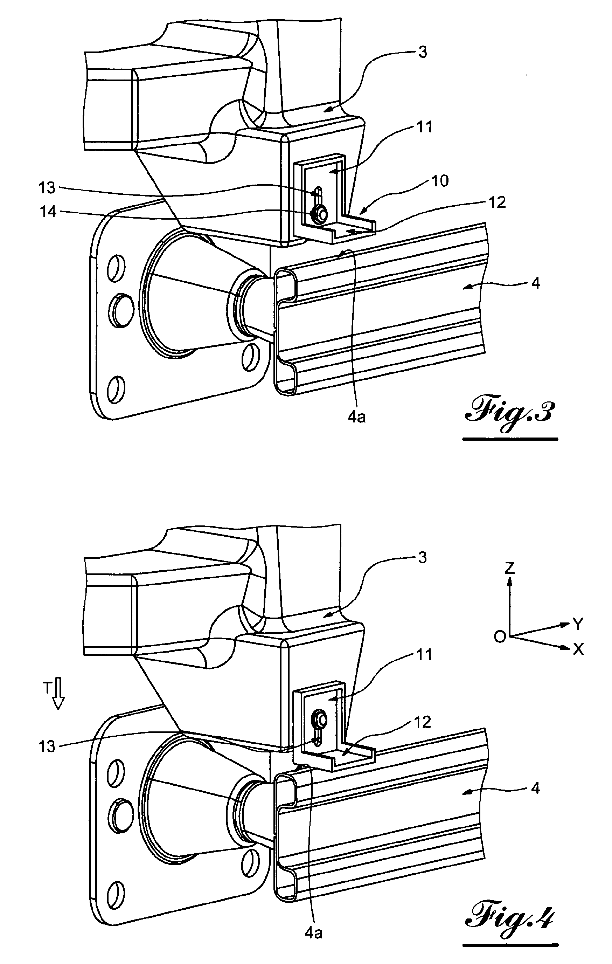

Une pièce d'appui réglable 10, conforme au principe de la présente invention, réalisée en matériau rigide, intégrée à l'armature 3 de pare-chocs à mettre en place, est représentée sur le dessin des figures 3 et 4. Elle présente une forme générale en L, avec une branche de guidage 11 et une branche d'appui 12. La pièce d'appui réglable 10 peut coulisser sur l'armature 3 par l'intermédiaire d'un moyen de coulissement constitué par une lumière oblongue 13 de la branche de guidage 11 de la pièce d'appui 10 et un axe 14, solidaire de l'armature 3, qui vient coulisser dans la lumière oblongue 13. La pièce d'appui 10 est destinée à venir en contact avec une zone d'appui 4a de la caisse du véhicule, représentée par la poutre 4.

La mise en référence s'effectue par le déplacement selon la flèche T (figure 4) de l'armature de pare-chocs 3 sur la poutre 4. La mise en référence du pare-chocs est ainsi réalisée en même temps que la pose par gabarit de l'armature de pare-chocs et sa mise en référence selon l'axe en Z du véhicule. Comme illustré sur le dessin de la figure 4, la face inférieure de la branche d'appui 12 vient en contact avec la zone d'appui 4a de la poutre 4 de la caisse du véhicule.

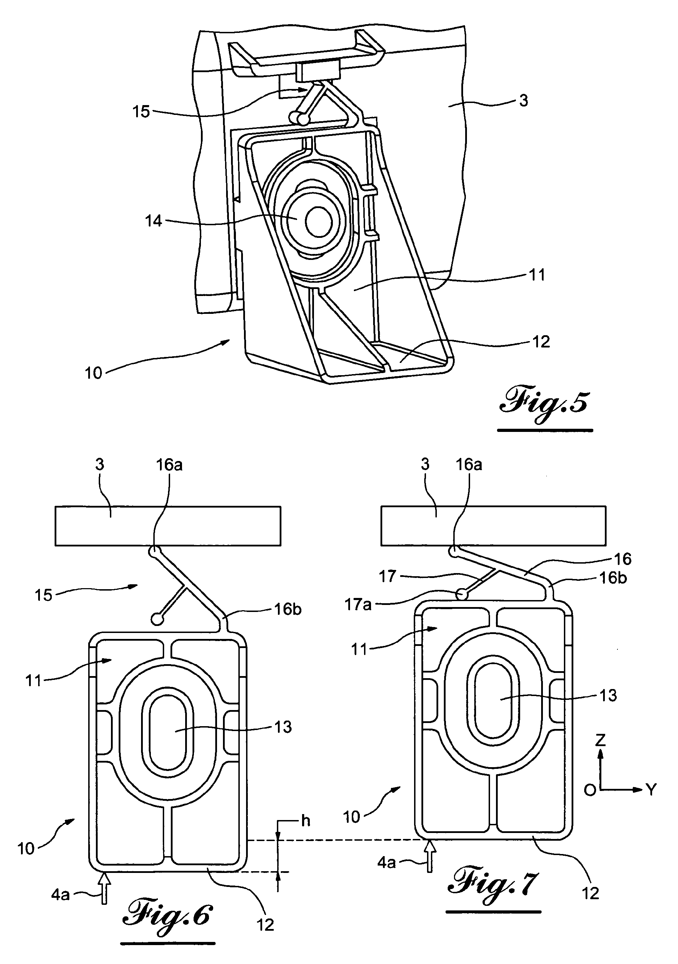

La figure 5 est une vue détaillée, en perspective, d'une pièce d'appui réglable, selon la présente invention, qui montre les moyens mécaniques intégrés qui ont pour fonction de prendre en compte les dispersions géométriques et dimensionnelles de la caisse du véhicule.

La pièce d'appui 10 peut coulisser sous l'effet d'un système de ressort intégré 15 (dessiné en interférence avec l'armature sur la figure 5), qui fonctionne de la manière décrite ci-dessous.

En référence aux figures 6 et 7, le système de ressort intégré 15 est constitué par une patte élastique 16, en matériau relativement souple, en extension et intégrée à la branche de guidage 11, qui vient en contact, par son extrémité libre 16a, avec une surface d'appui de l'armature de pare-chocs 3. La patte élastique 16 en appui contre l'armature 3 peut pivoter autour de son extrémité 16b de liaison avec la branche de guidage 11. Le système de ressort intégré 15 comporte aussi une patte secondaire 17, qui est reliée à la partie sensiblement médiane de la patte 16 et qui comporte une extrémité libre 17a qui vient en butée contre la branche de guidage 11 lors de la compression du système de ressort 15.

L'effet ressort du système de ressort intégré 15 est réalisé par déformation élastique des deux pattes 16 et 17.

Suivant la position de la zone d'appui 4a (schématiquement représentée sur les figures 6 et 7) de la structure du véhicule, le système de ressort intégré 15 se comprime plus ou moins et garantit, de cette façon, la mise en référence de l'armature de pare-chocs. La dispersion selon l'axe en Z du véhicule, désignée;« h », est alors parfaitement absorbée.

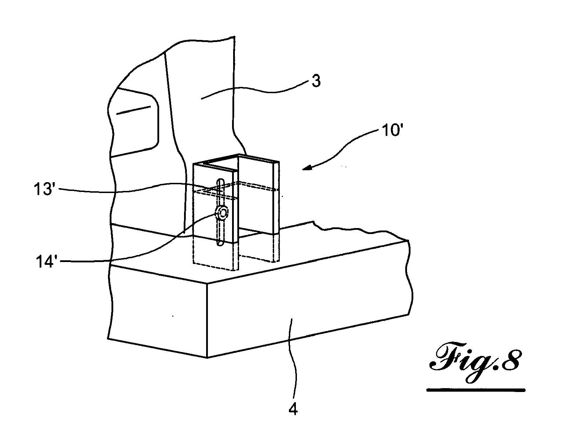

La figure 8 représente, de manière schématique, une variante de réalisation de la pièce d'appui réglable 10 décrite ci-dessus. Dans cette autre mode de réalisation, la pièce d'appui, désignée 10', présente une forme générale en U. La face d'appui de la pièce d'appui sur la zone d'appui de la poutre est une surface latérale du U. La pièce d'appui réglable 10' peut coulisser sur l'armature 3 par l'intermédiaire d'une rainure oblongue 13' et une vis 14', qui traverse la rainure oblongue 13', fait fonction d'axe de coulissement. La pièce d'appui 10' est destinée à venir en contact avec une zone d'appui de la caisse du véhicule ; elle comporte mutatis mutandis les mêmes moyens mécaniques intégrés que la pièce d'appui réglable 10 décrite ci-dessus pour prendre en compte les dispersions géométriques et dimensionnelles de la caisse du véhicule.

La présente invention présente de nombreux avantages, parmi lesquels les avantages suivantes :
- grâce à son système de ressort intégré, elle permet de réaliser la mise en appui dans tous les sens et toutes les directions possibles,
- elle permet de limiter le nombre de références précises sur la caisse du véhicule, par conséquent de réaliser un gain sur le coût des moyens de ferrage et des pièces de structure,
- elle permet d'améliorer l'esthétique du pare-chocs sur la caisse du véhicule, en terme de qualité perçue par le client et utilisateur.

Bien entendu, la présente invention n'est pas limitée aux modes de réalisation décrits et représentés ci-dessus à titre d'exemples ; d'autres modes de réalisation peuvent être conçus par l'homme de métier sans sortir du cadre et de la portée de la présente invention.

## Revendications

1. Dispositif de mise en référence géométrique d'un pare-chocs (1) pour son montage sur une structure de véhicule, en particulier de véhicule automobile, le pare-chocs (1) comprenant une armature (3) de pare-chocs et la structure comprenant des zones d'appui pour l'armature (3) de pare-chocs, ledit dispositif étant constitué d'au moins une pièce d'appui (10), qui est montée sur l'armature (3) de pare-chocs et vient en appui sur une zone d'appui (4a) de la structure, ladite pièce d'appui comportant un moyen permettant de la faire coulisser par rapport à ladite armature (3) de pare-chocs contre l'action d'un moyen de rappel élastique (15), de manière à réaliser la mise en référence dans tous les sens et toutes les directions du pare-chocs (1) sur la caisse du véhicule, ledit moyen de coulissement par rapport à l'armature (3) de pare-chocs étant constitué par une lumière oblongue (13) et un axe (14), qui peut coulisser dans ladite lumière (13), **caractérisé en ce que** la lumière est une lumière de la pièce d'appui (10) et l'axe est solidaire de l'armature (3) de pare-chocs et **en ce que** ledit moyen de rappel élastique est constitué par un système de ressort (15) comprenant au moins une patte élastique souple (16) qui vient en appui sur l'armature (3) de pare-chocs, l'effet de rappel élastique étant obtenu par la déformation élastique de la patte élastique souple (16), ladite patte élastique souple (16) du système de ressort (15) étant intégrée à la partie supérieure de la pièce d'appui, son extrémité libre (16a) venant en appui sur l'armature (3) de pare-chocs, ledit système à ressort (15) comportant aussi une patte secondaire (17), qui est reliée à la partie sensiblement médiane de la patte élastique souple (16) et qui comporte une extrémité libre (17a) venant en appui contre la partie supérieure de la pièce d'appui (10) lors de la compression du système de ressort (15).

2. Dispositif selon la revendication 1, **caractérisé en ce que** les pièces d'appui (10) sont au nombre de deux, situées dans le voisinage de l'une et l'autre des extrémités de l'armature (3) de pare-chocs.

3. Dispositif selon l'une quelconque des revendications 1 à 2, **caractérisé en ce que** chaque pièce d'appui (10') présente une forme sensiblement en U, la face qui vient en appui sur la zone d'appui (4a) de la structure du véhicule étant une surface latérale du U.

4. Dispositif selon l'une quelconque des revendications 1 à 3, **caractérisé en ce que** chaque pièce d'appui (10) présente une forme sensiblement en L, la face qui vient en appui sur la zone d'appui (4a) de la structure du véhicule étant une branche du L.

5. Dispositif selon la revendications 4, **caractérisé en ce que** ladite pièce d'appui (10) en forme de L est constituée d'une branche de guidage (11), sensiblement verticale, portant le moyen de coulissement et d'une branche d'appui (12), sensiblement horizontale, qui vient en appui sur la zone d'appui (4a) de la structure du véhicule.

## Claims

1. Device for geometric location of a bumper (1) for mounting thereof on a structure of a vehicle, in particular a motor vehicle, the bumper (1) comprising a bumper frame (3) and the structure comprising support zones for the bumper frame (3), said device consisting of at least one support piece (10) that is mounted on the bumper frame (3) and comes into abutment on the support zone (4a) of the structure, said support piece comprising a means for sliding it with respect to said bumper frame (3) counter to the action of a resilient return means (15), so as to carry out the location of the bumper (1) on the vehicle body in all directions, said means of sliding with respect to the bumper frame (3) consisting of an oblong aperture (13) and a stud (14) that can slide in said aperture (13), **characterised in that** the aperture is an aperture on the support piece (10) and the stud is secured to the bumper frame (3) and **in that** said resilient return means consists of a spring system (15) comprising at least one flexible resilient lug (16) that comes into abutment on the bumper frame (3), the resilient return effect being obtained by the resilient deformation of the flexible resilient lug (16), said flexible resilient lug (16) of the spring system (15) being integrated in the top part of the support piece, its free end (16a) coming into abutment on the bumper frame (3), said spring system (15) also comprising a secondary lug (17) that is connected to the substantially central part of the flexible resilient lug (16) and comprises a free end (17a) coming into abutment against the top part of the support piece (10) when the spring system (15) is compressed.

2. Device according to claim 1, **characterised in that** there are two support pieces (10), situated in the vicinity of the two ends of the bumper frame (3).

3. Device according to either of claims 1 to 2, **characterised in that** each support piece (10') is substantially U-shaped, the face that comes into abutment on the support zone (4a) of the vehicle structure being a lateral surface of the U.

4. Device according to any one of claims 1 to 3, **characterised in that** each support piece (10) is substantially L-shaped, the face that comes into abutment on the support zone (4a) of the vehicle structure being an arm of the L.

5. Device according to claim 4, **characterised in that** said L-shaped support piece (10) consists of a substantially vertical guidance arm (11) carrying the sliding means and a substantially horizontal support arm (12) that comes into abutment on the support zone (4a) of the structure of the vehicle.

## Patentansprüche

1. Vorrichtung zur geometrischen Lokalisierung eines Stossfängers (1) für seine Anbringung an einer Fahrzeugstruktur, insbesondere eines Kraftfahrzeugs, wobei der Stossfänger (1) eine Stossfängerbewehrung (3) umfasst und die Struktur Auflagebereiche für die Stossfängerbewehrung (3) umfasst, wobei die Vorrichtung aus zumindest einem Auflagestück (10) gebildet ist, das auf der Stossfängerbewehrung (3) montiert ist und auf einem Auflagebereich (4a) der Struktur aufzuliegen kommt, wobei das Auflagestück ein Mittel umfasst, das es ermöglicht, es bezüglich der Stossfängerbewehrung (3) gegen die Wirkung eines elastischen Rückstellungsmittels (15) gleiten zu lassen, um die Lokalisierung des Stossfängers (1) auf der Fahrzeugkarosserie in alle Richtungen durchzuführen, wobei das Mittel zum Gleiten bezüglich der Stossfängerbewehrung (3) durch eine längliche Öffnung (13) und eine Achse (14) gebildet ist, die in die Öffnung (13) gleiten kann, **dadurch gekennzeichnet, dass** die Öffnung eine Öffnung des Auflagestücks (10) ist und die Achse mit der Stossfängerbewehrung (3) fest verbunden ist und **dadurch**, dass das elastische Rückstellungsmittel aus einem Federsystem (15) besteht, das zumindest einen flexiblen elastischen Fuß (16) umfasst, der auf der Stossfängerbewehrung (3) aufzuliegen kommt, wobei die Wirkung der elastischen Rückstellung durch die elastische Verformung des flexiblen elastischen Fußes (16) erhalten wird, wobei der flexible elastische Fuß (16) des Federsystems (15) in den oberen Teil des Auflagestücks integriert ist und sein freies Ende (16a) auf der Stossfängerbewehrung (3) aufzuliegen kommt, wobei das Federsystem (15) auch einen zweiten Fuß (17) umfasst, der mit dem im Wesentlichen mittleren Teil des flexiblen elastischen Fußes (16) verbunden ist und der ein freies Ende (17a) umfasst, das auf dem oberen Teil des Auflagestücks (10) aufzuliegen kommt, wenn das Federsystem (15) zusammengedrückt wird.

2. Vorrichtung nach Anspruch 1, **dadurch gekennzeichnet, dass** es zwei Auflagestücke (10) gibt, die sich in der Nähe der beiden Enden der Stossfängerbewehrung (3) befinden.

3. Vorrichtung nach einem der Ansprüche 1 bis 2, **dadurch gekennzeichnet, dass** jedes Auflagestück (10') im Wesentlichen eine U-Form aufweist, wobei die Seite, die auf dem Auflagebereich (4a) der Struktur des Fahrzeugs aufzuliegen kommt, eine seitliche Fläche des U ist.

4. Vorrichtung nach einem der Ansprüche 1 bis 3, **dadurch gekennzeichnet, dass** jedes Auflagestück (10) im Wesentlichen eine L-Form aufweist, wobei die Seite, die auf dem Auflagebereich (4a) der Struktur des Fahrzeugs aufzuliegen kommt, eine Arm des L ist.

5. Vorrichtung nach Anspruch 4, **dadurch gekennzeichnet, dass** das Auflagestück (10) in L-Form aus einem im Wesentlichen vertikalen Führungsarm (11), der das Gleitmittel trägt, und einem im Wesentlichen horizontalen Stützarm (12), der auf dem Auflagebereich (4a) der Struktur des Fahrzeugs aufzuliegen kommt, besteht.
